# EUROPEAN PATENT SPECIFICATION

(11) **EP 0 500 569 B1**
(45) Date of publication and mention of the grant of the patent: **06.04.1994**
(21) Application number: 90915478.3
(22) Date of filing: 30.10.1990
(51) Int. Cl.: B65B 35/26, B65G 17/32

(54) **CONVEYOR WITH COMPARTMENTS INTERCONNECTED BY FLEXIBLE SEALING MEMBERS**
FÖRDERER MIT ÜBER FLEXIBLE DICHTGLIEDER VERBUNDENEN ZELLEN
TRANSPORTEUR POSSEDANT DES COMPARTIMENTS INTERCONNECTES PAR DES ELEMENTS D'ETANCHEITE SOUPLES

(30) Priority: 09.11.1989 FI 895323
(43) Date of publication of application: 02.09.1992
(73) Proprietor: OY JOPAMAC AB, 30100 Forssa (FI)
(72) Inventor: VIRTANEN, Pekka, SF-25360 Pertteli (FI)
(74) Representative: Gramm, Werner, Prof., Dipl.-Ing.
(86) International application number: FI9000258
(87) International publication number: WO9107323

(56) References cited:
- WO-A-90/09315
- DE-A- 2 730 805
- DE-B- 1 274 967
- US-A- 2 753 979
- DERWENT'S ABSTRACT, No. 86-317 306/48, SU 1 221 090, publ. week 8648

## Description

The invention relates to a conveyor described in the preamble portion of claim 1, designed especially for packaging machines.

In the conveyor of the described type objects, such as packages to be packed, are conveyed in compartments arranged on top of an endless belt loop. This kind of belt loop comprises generally two rolles, which guide the conveyer travel. The rotational axes of such rollers are substantially horizontal and in the same plane, and the compartments advance within the section between the rolles above said plane along a straight path in one direction, and within the opposite section below said plane they will return back. In such conveyors, the feeding of the objects to be conveyed takes place generally at a reversing point on the roller before the above-mentioned straight superior section, along which the objects advance forward in the compartments forward on top of the belt to a point where they are removed from the belt for e.g. packaging purposes. Especially when flat objects are fed and conveyed there may arise problems owing to the fact that the form of the compartments will change. The compartments are as a rule constituted of plates bent to the shape of a L and fastened on top of the conveyor belt. This may lead to clamping of a sealed edge, present at the bottom of e.g. a flat bag, between the bottom of such plate and the outer-surface of the preceding plate facing the compartment. The problem is especially difficult at the point where these parts move relatively to each other, for example, when the conveyor makes the turn at said reversing point. This kind of problem is manifested by e.g. German Offenlegungsschrift DE-A-2,730,805 showing the purpose of reducing said gap by shaping the plates in a special way. However, the gap always exists and creates the problem, even if it is made as small as possible. Moreover, the reduction of the gap may effect other operations of the conveyor.

Another problem originating from this technique and associated with reduction of the gap mentioned above has become evident in course of manufacturing of a conveyor. The plates must in this case be spaced very accurately in respect of each other so as to avoid the presence of too wide gaps in one hand and on the other hand the positioning of the plates too closely to each other, which may result to their mutual contact and even to malfunction of the entire conveyor. This problem is also clearly manifested by said German Offenlegungsschrift DE-A-2,730,805.

The aim of the invention is to eliminate the above-mentioned drawbacks and to provide a conveyor having a reliable operation and which can also be easily assembled. For realizing this object the conveyor according to the invention is mainly characterized by what is disclosed in the characterizing portion of the claim 1. According to the invention, a flexible sealing member is provided in the compartments between the bottom of a compartment and the partition bounding the compartment, and the underside of said member located adjacent to said partition is lying against the surface of the partition. Two important advantages are obtained by this arrangement:
- The sealing members cover the gaps formed between the partitions and the bottoms without preventing the deformation of the compartments and the relative movements of the partitions and the bottoms.
- The partitions can be placed one after the other using wider manufacturing tolerances, and to be on the safe side, the above-mentioned gaps can be even made wider than usually.

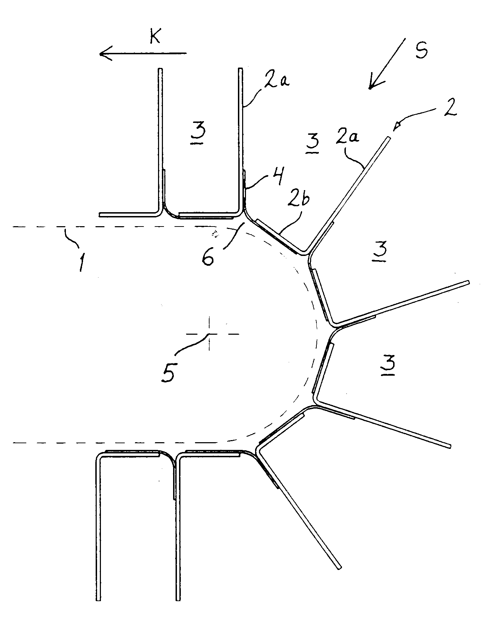

The invention will be described more closely in the following description with the reference to the appended drawing showing the conveyor in accordance with the invention as seen from the side at the reversing point of the conveyor.

The conveyor is intended for packaging machines. The conveyor comprises an endless conveyor support 1, such as a belt provided for travel along a path which is in the form of a loop, for example. On top of the conveyor support 1 are disposed compartments 3 one after the other in the travelling direction of the support. The compartments are separated by relatively stiff partitions 2a having a predetermined width in the direction exending transversely to the travelling direction of the support. The partititions extend outwardly from the support 1. The conveyor support 1 is quided by rollers (the axis of one of the rollers is denoted by reference numeral 5) and within the area between the rollers the compartments 3 travel on top of the support in one direction and return back on the lower side. The objects are usually fed into the compartments 3 at the reversing point on the roller where the conveyor support travels along a circular path, the feeding point being denoted by arrow S.

As it is apparent from the drawing, the compartments 3 are formed of plates having the shape of a L placed on top of the conveyor support. The plates have suitable stiffness and they can be e.g. metal plates. The vertical parts of said plates form the above-mentioned partitions 2a and the horizontal parts positioned in the same direction form the bottoms 2b of the compartments. Each compartment 3 is bounded in the direction opposite to the travelling direction of the conveyor (arrow K) by the vertical part 2a of a plate, towards the conveyor support 1 by the horizontal part 2b of the same plate forming the bottom, and in the travelling direction of the conveyor by the vertical part 2a of the adjacent plate, said part acting at the same time as a partition 2a separating said compartment from the adjacent compartment in the travelling direction. According to the invention, in each compartment there is provided between the bottom 2b of the compartment 3 and the partition 2a standing between the compartment and the adjacent compartment 3 a flexible thin band-like sealing member 4, the underside of which facing the adjacent compartment lies against the surface of the partition 2a. The underside of the sealing member shall mean in this context the surface of the sealing member being on the opposite side with regard to its upper surface facing the compartment 3. The undersides of the sealing members 4 are pressed in each compartment within a wide area against the surfaces of the partitions 2a and their end edges being in contact with these partition surfaces are free to move in the vertical direction of the partitions as the shape of the compartment 3 is changing on the quiding roller at the reversing point of the conveyor support. The sealing members 4 cover the gaps 6 between the forward edge of the horizontal part 2b and the plate 2 boundig the adjacent compartment. These gaps would otherwise be exposed.

In the practice the sealing members are mounted in their places by attaching them between the horizontal parts 2b and the conveyor support 1 and they extend in each compartment 3 from below the forward edge of said part 2b towards the partition 2a bounding the adjacent compartment and are pressed against the surface thereof. The sealing members 4 have approximately the same width as the part 2b in the transverse direction with regard to the travelling direction of the conveyor, and they act in a sort of way as flexible extension of the part 2b, directed towards the travelling direction of the conveyor. Any kind of flexible band-like material can be used as a sealing member, on the condition that it is stiff enough on one hand in order to retain good contact with the surface of the partition 2a, but on the other hand can yield to the deformations of the compartments 3. The surfaces of the sealing members 4 coming in contact with the partitions 2a must also be of a material which allows them to slide easily in the vertical direction of the partitions.

The sealing members can also be attached onto the upper surfaces of the parts 2b, in which case they cover the bottom of the compartment 3, the gap 6, as well as the adjacent partition 2a. The function of the sealing members is similar in this event. It is also possible that the end edges of the sealing members adjacent to the partitions 2a are extended as far as to the upper edges of the partitions. It is also possible to use the alternative of covering the interior surfaces of the entire compartment 3 with a single flexible sealing member 4. On the other hand, the invention works well also by using only a short sealing member of a sufficient length in order to cover the gap.

The invention is not restricted only to a conveyor described hereinabove, but it can be modified within the scope of the invention defined by the claims. The shape of the compartments may vary. The sealing members can be used according to the invention in all compartment or box conveyors having gaps exposed between the compartment bottoms and partitions.

## Claims

1. Conveyor,especially for packaging machines, comprising an endless conveyor support (1), such as belt, supporting separate compartments (3) for conveying objects, being placed one after the other in the travelling direction, the compartments (3) being formed between successive partitions (2a) in a manner such that recesses or gaps (6) are present between compartment bottoms (2b) and partitions (2a), **characterized** in that in the compartments (3) there is a flexible sealing member (4) between the bottom (2b) and the partition (2a), the underside of said sealing member located adjacent to said partition lying in the compartment against the surface of said partition (2a) covering at the same time said recess or gap (6).

2. Conveyor according to claim 1, **characterized** in that the underside of the sealing member (4) is pressed against the surface of the partition (2a) in a manner such that it is free to move in the vertical direction thereof during the deformation of the space bounded by the bottom (2b) and the partition (2a).

3. Conveyor according to claim 1 or 2, **charac****terized** in that in the compartment (3) the shape of the space bounded by a partition (2a) opposite to the partition (2a) comprising the sealing member (4), and by the bottom (2b) of the compartment, is constant during the travel of the conveyor.

4. Conveyor according to claim 3, **characterized** in that the compartments (3) are formed between plates (2) disposed on top of the conveyor support one after the other and having the shape of an L, the vertical legs of the L forming said partitions (2a) and the horizontal legs (2b) forming said bottoms, the sealing member (4) being placed in the compartment (3) to lie in the area between the horizontal leg (2b) and a vertical leg (2a) of the adjacent plate (2) separate from said horizontal leg.

5. Conveyor according to claim 4, **characterized** in that the sealing member (4) is attached, with its end edge opposite to the end edge on the partition (2a), between the horizontal leg (2b) and the conveyor support (1).

## Patentansprüche

1. Förderer, insbesondere für Verpackungsmaschinen, mit einem endlosen Förderträger (1), wie einem Gurt, die zum Fördern von Gegenständen getrennte Fächer (3) trägt, die hintereinander in Transportrichtung angeordnet sind, wobei die Fächer (3) zwischen aufeinanderfolgenden Trennwänden (2a) so ausgebildet sind, daß Zwischenräume oder Lücken (6) zwischen den Böden (2b) der Fächer und den Trennwänden (2a) vorhanden sind, **da****durch gekennzeichnet,** daß in den Fächern (3) zwischen dem Boden (2b) und der Trennwand (2a) ein flexibles Dichtungsglied (4) vorgesehen ist, die Unterseite des Dichtungsglieds (4) benachbart zu der Zwischenwand angeordnet ist, im Fach an der Oberfläche der Trennwand (2a) anliegt und gleichzeitig den Zwischenraum oder die Lücke (6) abdeckt.

2. Förderer nach Anspruch 1, **dadurch gekennzeichnet,** daß die Unterseite des Dichtungsglieds (4) so gegen die Oberfläche der Trennwand (2a) gepreßt wird, daß sie frei ist, sich während der Veränderung des durch den Boden (2b) und die Trennwand (2a) begrenzten Zwischenraumes zu bewegen.

3. Förderer nach Anspruch 1 oder 2, **dadurch gekennzeichnet,** daß während der Bewegung des Förderers in dem Fach (3) die Form des Zwischenraumes, der durch die der das Dichtungsglied (4) aufweisenden Trennwand (2a) gegenüberliegenden Trennwand (2a) und durch den Boden (2b) des Fachs begrenzt wird, konstant ist.

4. Förderer nach Anspruch 3, **dadurch gekennzeichnet,** daß die Fächer (3) zwischen Platten (2) ausgebildet sind, die oben auf der Förderauflage eine nach der anderen angeordnet sind und die Form eines "L" aufweisen, wobei die vertikalen Schenkel des "L" die Trennwände (2a) und die horizontalen Schenkel (2b) die Böden ausbilden, das Dichtungsglied (4) so angeordnet ist, daß es in dem Bereich zwischen dem horizontalen Schenkel (2b) und einem vertikalen Schenkel (2a) einer angrenzenden Platte (2) liegt, die von dem horizontalen Schenkel getrennt ist.

5. Förderer nach Anspruch 4, **dadurch gekennzeichnet,** daß das Dichtungsglied (4) mit seiner der Endkante der Trennwand (2a) gegenüberliegenden Endkante zwischen dem horizontalen Schenkel (2b) und dem Förderträger (1) befestigt ist.

## Revendications

1. Transporteur, particulièrement pour machines d'emballage, comprenant un support transporteur sans fin (1) tel qu'une courroie, supportant des compartiments séparés (3) pour transporter des objets, placés l'un après l'autre dans la direction de déplacement, les compartiments (3) étant formés entre des cloisons successives (2a) d'une manière telle que des évidements ou intervalles (6) sont présents entre cloisons (2a) et fonds (2b) des compartiments caractérisé en ce qu'il y a dans les compartiments (3) un organe d'étanchéité flexible (4) entre le fond (2b) et la cloison (2a), le côté inférieur de l'organe d'étanchéité situé de manière adjacente à cette cloison s'étendant dans le compartiment contre la surface de cette cloison (2a) en couvrant en même temps ledit évidement ou intervalle (6).

2. Transporteur selon la revendication 1, caractérisé en ce que le côté inférieur de l'organe d'étanchéité (4) est appuyé contre la surface de la cloison (2a) de manière à être libre de se déplacer dans sa direction verticale pendant la déformation de l'espace délimité par le fond (2b) et la cloison (2a).

3. Transporteur selon la revendication 1 ou 2, caractérisé en ce que dans le compartiment (3) la forme de l'espace délimité par une cloison (2a) opposée à la cloison (2a) comportant l'organe d'étanchéité (4), et par le fond (2b) du compartiment est constante pendant le mouvement du transporteur.

4. Transporteur selon la revendication 3, caractérisé en ce que les compartiments (3) sont formés entre des plaques (2) disposées l'une après l'autre sur le dessus du support transporteur et ayant la forme d'un L, les jambes verticales des L formant lesdites cloisons (2a) et les jambes horizontales (2b) formant les fonds, l'organe d'étanchéité (4) étant placé dans le compartiment (3) de façon à s'étendre dans la zone entre la jambe horizontale (2b) et une jambe verticale (2a) de la plaque adjacente (2) séparée de ladite jambe horizontale.

5. Transporteur selon la revendication 4, caractérisé en ce que l'organe d'étanchéité (4) est attaché, par son bord extrême opposé au bord extrême situé sur la cloison (2a), entre la jambe horizontale (2b) et le support transporteur (1).
